# EUROPÄISCHE PATENTSCHRIFT

(11) **EP 2 656 956 B1**
(45) Veröffentlichungstag und Bekanntmachung des Hinweises auf die Patenterteilung: **23.04.2014**
(21) Anmeldenummer: 12002977.2
(22) Anmeldetag: 27.04.2012
(51) Int. Cl.: B23K 9/025, B23K 9/028, B23K 26/26, B23K 26/28, B23K 31/02, B23K 33/00, B21C 37/08, F16L 13/02

(54) **Verfahren zum Herstellen eines längsverschweißten Rohres aus einem Metallblech mit einer von Längskanten beabstandeten Fase ; Solchermaßen hergestelltes Metallrohr**
Method of manufacturing a longitudinally welded pipe from metal sheet with a discontinuous bevel ; Metal pipe manufactured according to the method
Procédé de fabrication d'un tuyau soudé dans sa longueur à partir d'une tôle de métal avec un chanfrein discontinu ; Tuyau de métal fabriqué de la sorte

(43) Veröffentlichungstag der Anmeldung: 30.10.2013
(73) Patentinhaber: EEW Special Pipe Constructions GmbH, 18147 Rostock (DE)
(72) Erfinder: Mützelburg, Udo, 18147 Rostock (DE)
(74) Vertreter: Kossak, Sabine

(56) Entgegenhaltungen:
- WO-A1-03/104703
- WO-A1-2009/126023
- JP-A- 54 040 266
- JP-A- 61 279 392
- US-A1- 2009 110 950

## Beschreibung

Die Erfindung betrifft ein Verfahren zum Herstellen eines längsverschweißten Rohres aus einem Metallblech mit folgenden Schritten: Biegen des Metallbleches zu einem Rohr, so dass zwei Längskanten einen Schweißstoß für die Längsnaht bilden, Anordnen je eines Anlauf- bzw. Auslaufsbleches an beiden Seiten des Schweißstoßes, und Ausführung der Längsschweißnaht beginnend an dem Anlaufblech, anschließend entlang des Schweißstoßes und abschließend an dem Auslaufblech. Die Erfindung betrifft ferner ein solchermaßen hergestelltes Metallrohrgemäß dem Oberbegriff des Anspruchs 6 (siehe, z.B., JP 54 /040 266 A).

Längsnahtgeschweißte Metallrohre, insbesondere aus Stahlblechen, sind im Stand der Technik hinreichend bekannt. Entsprechende Metallrohre mit einem erheblichen Durchmesser finden ihren Einsatz beispielsweise in der Erdölindustrie oder bei der Herstellung von großen Bauwerken aus Metall. Ein Einsatz ist zum Beispiel auch bei dem Fundamentbau für Off-Shore-Anlagen, insbesondere Windkraftanlagen möglich.

Für ein optimales Schweißergebnis ist es wichtig, dass für das Ausführen der Längsnaht sogenannte Ein- und Auslaufbleche montiert werden müssen, um das Starten und das Beenden der Schweißung, also die möglichen Fehlerquellen im aktiven Nahtbereich auszuschließen. Die Schweißnaht läuft somit zunächst über das Einlaufblech in den aktiven Nahtbereich und am Nahtende in das Auslaufblech. Während des gesamten Schweißprozesses befindet sich dieser Bereich im vorgegebenen Temperaturzyklus. Durch diese Maßnahmen wird eine fehlerfreie Naht garantiert, denn die Ein- und Auslaufbleche werden abschließend wieder entfernt.

Hierbei werden oftmals mehrere längsverschweißte Metallrohre miteinander über Rundschweißnähte verbunden. Um die Rundschweißnähte vorzubereiten, werden an dem Metallblech die Querkanten, die nach einem Biegen zum Rohr die Zylinderkante bilden, mit einer geeigneten Fase versehen. Die Fase ist mittels einer entsprechenden Fräse hergestellt. Die für die Längsverschweißung erforderlichen Anlauf- bzw. Auslaufbleche müssen an die Fase für die Rundverschweißung angepasst werden und bestehen üblicherweise aus mehreren Lagen. Durch die Mehrlagigkeit können im ungünstigen Fall Hohlräume zwischen den Anlauf- bzw. Auslaufblechen und der Rundnahtvorbereitung entstehen, wodurch die Gefahr der Entstehung von Schweißfehlern in diesen Bereichen deutlich anwächst. Ferner muss zur Herstellung der verschiedenen Fasenwinkel der Fräskopf gewechselt werden, wodurch der Produktionsaufwand und die Produktionskosten deutlich ansteigen.

Der Erfindung liegt die Aufgabe zugrunde, eine Möglichkeit zu schaffen, längsverschweißte Metallrohre in kostengünstiger und einfacher Weise auf eine Rundnahtverschweißung vorzubereiten. Weiterhin liegt der Erfindung die Aufgabe zugrunde, entsprechende längsverschweißte Metallrohre bereitzustellen, die in einfacher Weise für ein Rundschweißen vorbeireitet sind.

Die erstgenannte Aufgabe wird erfindungsgemäß mit einem Verfahren gemäß den Merkmalen des Anspruchs 1 gelöst. Bei einem Verfahren zur Herstellung längsverschweißter Metallrohre der vorstehend beschriebenen Art ist erfindungsgemäß vorgesehen, dass das Metallblech vor dem Biegen zur Vorbereitung einer Rundschweißnaht an zumindest einer Querkante mit einer Fase versehen wird, die beabstandet von den Längskanten beginnt und endet. Hierdurch ist in dem Bereich, an dem das Anlauf- bzw. das Auslaufblech an dem gebogenen Metallblech angeordnet werden, keine Fase vorhanden. In diesem Bereich können nun Anlauf- bzw. Auslaufblech angeordnet werden, die nicht mehr aufwändig für verschiedene Fasen der Rundnahtvorbereitung vorgeformt und bereit gestellt werden müssen. In dem Bereich ohne Fase ist an den Querkanten von der Innenfläche des Rohres zu der Außenkante ein Winkel im Wesentlichen von 90° vorgesehen. An diese 90° Kanten können nun Anlauf- bzw. Auslaufbleche ohne Stirnkantenbearbeitung verwendet werden. Dies reduziert erheblich den Produktionsaufwand und damit die Kosten.

Um die unterschiedliche Gestaltung der Blechkante mit und ohne Fase zu bilden, ist erfindungsgemäß vorgesehen, dass ein Fräskopf in einer ersten vertikalen Position zum Fräsen eines 90° Winkels und in einer zweiten vertikalen Position zum Fräsen eines Innen V-Profils horizontal vorgefahren wird.

Für eine optimale Fasenherstellung im Bereich des Positionswechsels ist erfindungsgemäß vorgesehen, dass im Bereich des Wechsels aus der ersten vertikalen Position in die zweite vertikale Position der Fräskopf zurückgefahren wird, um die Strecke des Positionswechsels nachzubearbeiten.

Für eine vorteilhafte Abstimmung der Vorschubgeschwindigkeiten ist erfindungsgemäß vorgesehen, dass die Vorschubgeschwindigkeit des Fräskopfes in vertikale Richtung langsamer ist als die Vorschubgeschwindigkeit in horizontaler Richtung.

Im Bereich ohne Fase nach dem Biegen des Metallblechs wird ein Anlauf- bzw. Auslaufblech an das Metallrohr angesetzt wird. Da hier keine Fase ausgebildet ist, müssen die Stirnseiten des Anlauf- bzw. Auslaufbleches nicht angefast sein.

Die zweitgenannte Aufgabe wird erfindungsgemäß durch ein Metallrohr gelöst, welches durch ein erfindungsgemäßes Verfahren hergestellt ist, wobei das Metallrohr außerhalb des Bereichs der Längsschweißnaht an der Innenkante des gebildeten Hohlzylinders eine Fase aufweist, siehe Anspruch 6.

Die erfindungsgemäßen Metallrohre haben bevorzugt Abmessungen von 2m bis 7m Durchmesser und besitzen eine Breite von 2 bis 4m sowie von 10t bis 45t. Ein durchschnittliches Blechgewicht entspricht beispielsweise zirka 30t sowie 5m Durchmesser und 3m Breite. Ein gesamtes Fundament aus mehreren verschweißten Einzelrohren hat z.B. ein durchschnittliches Gewicht von 600t und kann bis zu max. 1000t wiegen.

Nachfolgend wird eine Ausführungsform des erfindungsgemäßen Metallrohres unter Bezug auf die beigefügten Zeichnungen beispielhaft detaillierter beschrieben, in denen
Fig. 1 eine perspektivische Ansicht eines Metallbleches vor dem Biegen zeigt;
Fig. 2 ein gebogenes Metallblech mit angesetztem Anlaufblech zeigt.

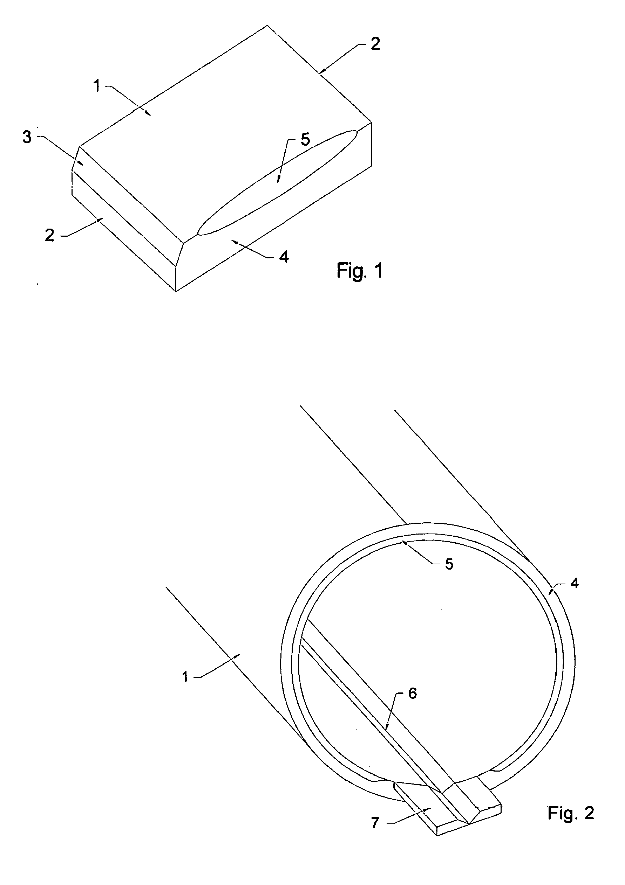

Figur 1 zeigt ein für ein erfindungsgemäßes Herstellverfahren vorbereitetes Metallblech 1. Das Metallblech 1 weist zwei Längskanten 2 auf die mit einer Fase 3 versehen sind. Nach einem Biegen des Metallbleches 1 bilden die Längskanten 2 mit den Fasen 3 einen Y-förmigen Schweißstoß.

Das Metallblech 1 weist an der Querkante 4 ebenfalls eine Fase 5 auf, die allerdings nicht über die gesamte Querseite reicht. Vielmehr beginnt die Fase 5 beabstandet von der Längskante 2 und endet entsprechend vor der anderen Längskante 3. So ist in dem Bereich des Schweißstoßes für die Längsverschweißung keine Fase in der Querkante vorgesehen.

In der Figur 2 ist das Metallblech 1 zu einem Rohr gebogen und die beiden Längskanten bilden den Schweißstoß 6. In der Figur 2 ist deutliche die Fase 5 für die Rundschweißnaht zu erkennen, die an der Innenkante des gebildeten Hohlzylinders verläuft. Im Bereich des Schweißstoßes der Längsschweißnaht ist ein Anlaufblech 7 angesetzt.

Wie in den Figuren zu erkennen, erfolgt die Vorbereitung für die Rundschweißnaht nicht mehr über die gesamte Länge der Querkanten. Es bleibt an beiden Enden ein gefrästes Stück mit einem 90° Winkel bestehen. Bei großen Rohrdurchmessern können diese Stücke bis zu 80 mm Streckenlänge betragen. Diese Bereiche dienen dem nun vereinfachten Ansetzen des Anlauf- bzw. Auslaufbleches 7. Ferner wird für die Rundschweißnaht im Bereich der Fase eine einfachere Fasenform gewählt. So wird nur noch ein Innen-V an die Querkante 4 angefräst, so dass mit der Rundnahtvorbereitung eines weiteren Metallrohres eine Rundverschweißung mit einer Y-Naht entsteht.

Dies erfolgt im Wesentlichen durch einen geeigneten Fräskopf mit einem angepassten Steuerungsprogramm einer eingesetzten Blechkantenfräse, bei der ein Wechsel des Fräskopfes nicht mehr erforderlich ist. Das Fräsen der Y-Naht erfolgt mit einem neuartigen Einstechvorgang. Da dieser nicht senkrecht erfolgen kann, erfolgt das Einstechen schräg von oben nach unten. Dieses Einstechen ist bei einer maximalen Vorschubgeschwindigkeit von 400 mm/min möglich. Die gleichzeitig durchgeführte Vertikalzustellung nach unten ist um den Faktor 5 langsamer und beträgt somit maximal 80 mm/min. Hat der Fräskopf seine untere Position, so kann die schräge, welche durch das schräge Einfräsen entstanden ist, durch ein Zurückfahren nachgesetzt werden. Hierdurch entsteht der runde Fräserauslauf im Bereich des Y-Profils. Entsprechend ist an dem anderen Ende des Metallblechs vorzugehen. Ist das Ende der Fase erreicht, wird der Fräskopf entsprechend zurückgefahren und bei einem nochmaligen Vorfahren wieder nach oben auszufahren und anschließend den Endbereich mit dem 90° Winkel auszufräsen. Bei dem erfindungsgemäßen Vorbereiten der Rundnacht kommt es auf ein gelungenes Zusammenspiel des besonders gestalteten Fräskopfes mit horizontalen und vertikalen Vor- und Zurückfahrvorgängen des Fräskopfes an, die die besondere Ausgestaltung der Fase bewirken.

Das Fräsen der erforderlichen Fasen kann mit einem besonders gestalteten Fräskopf mit einem etwa Y-förmigen Querschnitt erfolgen, ohne dass der Fraskopf ausgetauscht werden muss. Die reduziert erheblich den Produktionsaufwand.

Weiterhin müssen die Anlauf- bzw. Auslaufbleche an ihren jeweiligen Stirnseiten nicht mehr mit einer Fase versehen werden, wodurch zusätzlich Produktionskosten reduziert werden. Auch wird bei den Anlauf- bzw. Auslaufblechen nur noch eine Lage benötigt, wodurch diese Bleche nun mehrfach verwendet werden können. Auch dieses bringt eine Kostenersparnis.

## Patentansprüche

1. Verfahren zum Herstellen eines längsverschweißten Rohres aus einem Metallblech mit folgenden Schritten:
- Biegen des Metallbleches (1) zu einem Rohr, so dass zwei Längskanten (2, 3) einen Schweißstoß (6) für die Längsnaht bilden,
- Anordnen je eines Anlauf- bzw. Auslaufsbleches (7) an beiden Seiten des Schweißstoßes (6), und
- Ausführung der Längsschweißnaht beginnend an dem Anlaufblech, anschließend entlang des Schweißstoßes (6) und abschließend an dem Auslaufblech (7),
**dadurch gekennzeichnet, dass**
das Metallblech (1) vor dem Biegen zur Vorbereitung einer Rundschweißnaht an zumindest einer Querkante (4) mit einer Fase (5) versehen wird, die beabstandet von den Längskanten beginnt und endet.

2. Verfahren nach Anspruch 1, **dadurch gekennzeichnet, dass** ein Fräskopf in einer ersten vertikalen Position zum Fräsen eines 90° Winkels und in einer zweiten vertikalen Position zum Fräsen eines Innen V-Profils horizontal vorgefahren wird.

3. Verfahren nach den Ansprüchen 2, **dadurch gekennzeichnet, dass** im Bereich des Wechsels aus der ersten vertikalen Position in die zweite vertikale Position der Fräskopf zurückgefahren wird, um die Strecke des Positionswechsels nachzubearbeiten.

4. Verfahren nach den Ansprüchen 2 oder 3, **dadurch gekennzeichnet, dass** die Vorschubgeschwindigkeit des Fräskopfes in vertikale Richtung langsamer ist als die Vorschubgeschwindigkeit in horizontaler Richtung.

5. Verfahren nach zumindest einem der vorhergehenden Ansprüche, **dadurch gekennzeichnet, dass** im Bereich ohne Fase nach dem Biegen des Metallblechs ein Anlauf- bzw. Auslaufblech angesetzt wird.

6. Metallrohr hergestellt durch ein Verfahren gemäß einem der vorhergehenden Ansprüche, umfassend an gebogenes Metallbleches (1) mit einem Schweißstoß (6) mit einer Längsnaht und an beiden Seiten des Schweißstoßes angeschweißten Anlauf- und Auslaufbleche (7), **dadurch gekennzeichnet, dass** das Metallrohr außerhalb des Bereichs der Längsschweißnaht an der Innenkante des gebildeten Hohlzylinders eine Fase aufweist, die beabstandet von der Längsnaht beginnt und endet.

## Claims

1. Method for the manufacture of a longitudinally welded tube from a piece of sheet metal comprising the following steps:
- bending of the metal sheet (1) to form a tube so that two longitudinal edges (2, 3) form a weld joint (6) for the production of the longitudinal seam.
- positioning of a run-on and a run-off plate (7) respectively on both sides of the weld joint (6), and
- executing the longitudinal weld starting at the run-on plate, subsequently moving along the weld joint (6) and finishing at the run-off plate (7), **characterised in that**
prior to bending, in preparation for a circumferential weld, the metal sheet (1) is provided with a chamfer (5) on at least one transverse edge (4), the chamfer starting and ending at a distance from the longitudinal edges.

2. Method in accordance with Claim 1, **characterised in that** a milling head is advanced in a first vertical position so as to mill a 90° angle and then, in a second vertical position, is advanced horizontally forward so as to mill an internal Vee profile.

3. Method in accordance with Claim 2, **characterised in that** in the area of changeover from the first vertical position to the second vertical position the milling head is retracted in order to refinish the changeover section.

4. Method in accordance with Claims 2 or 3, **characterised in that** the feed rate of the milling head in vertical direction is less than the feed rate in horizontal direction.

5. Method in accordance with at least one of the preceding Claims, **characterised in that** a run-on and a run-off plate respectively is placed in the area without a chamfer after the bending of the metal sheet.

6. Metal tube manufactured by a method in accordance with one of the preceding Claims, comprising a bent sheet of metal (1) with a weld joint (6) with a longitudinal seam and a run-on and a run-off bush (7) welded into position on both sides of the weld joint, **characterised in that** the metal tube has a chamfer formed outside of the area of the longitudinal weld on the inner edge of the hollow cylinder produced that starts and ends at a distance from the longitudinal seam.

## Revendications

1. Procédé de fabrication d'un tuyau soudé dans le sens de la longueur à partir d'une tôle métallique, comprenant les étapes suivantes :
- cintrage de la tôle métallique (1) pour former un tuyau, de sorte que deux bords longitudinaux (2, 3) forment un joint de soudure (6) pour le joint longitudinal,
- mise en place respectivement d'une tôle d'entrée et de sortie (7), des deux côtés du joint de soudure (6), et
- réalisation du joint de soudure longitudinal, en partant de la tôle d'entrée, puis le long du joint de soudure (6) et enfin sur la tôle de sortie (7),
**caractérisé en ce que**
la tôle métallique (1), avant le cintrage, pour préparer un joint de soudure circulaire, est pourvue, sur au moins un bord transversal (4), d'un chanfrein (5) qui commence et finit à distance des bords longitudinaux.

2. Procédé selon la revendication 1, **caractérisé en ce qu'**une tête de fraisage est avancée horizontalement dans une première position verticale, afin de fraiser un angle de 90°, et dans une deuxième position verticale, afin de fraiser un profil intérieur en V.

3. Procédé selon les revendications 2, **caractérisé en ce que** dans la région de passage de la première position verticale à la deuxième position verticale, la tête de fraisage est ramenée en arrière pour reprendre l'usinage de la portion du changement de position.

4. Procédé selon les revendications 2 ou 3, **caractérisé en ce que** la vitesse d'avance de la tête de fraisage dans la direction verticale est plus lente que la vitesse d'avance dans la direction horizontale.

5. Procédé selon au moins une des revendications précédentes, **caractérisé en ce que**, dans la région dépourvue de chanfrein, une tôle d'entrée et/ou de sortie est mise en place après le cintrage de la tôle métallique.

6. Tuyau métallique fabriqué par un procédé selon l'une quelconque des revendications précédentes, comprenant une tôle métallique (1) cintrée, dotée d'un joint de soudure (6) avec un joint longitudinal et des tôles d'entrée et de sortie (7) soudées de part et d'autre du joint de soudure, **caractérisé en ce que** le tube métallique présente, à l'extérieur de la zone du joint de soudure longitudinal, sur le bord intérieur du cylindre creux forme, un chanfrein qui commence et finit à distance du joint longitudinal.
